# EUROPÄISCHE PATENTANMELDUNG

(11) **EP 4 792 992 A2**
(43) Veröffentlichungstag der Anmeldung: **19.08.2026**
(21) Anmeldenummer: 26158614.3
(22) Anmeldetag: 13.02.2026
(51) Int. Cl.: B25J 5/00

(54) **HANDHABUNGSANLAGE MIT TRÄGERSTRUKTUR UND DARAN GEHALTENER MOBILER HANDHABUNGSEINHEIT**

(30) Priorität: 14.02.2025 DE 102025105581
(71) Anmelder: J. Schmalz GmbH, 72293 Glatten (DE)
(72) Erfinder: Frey, Matthias, 72172 Sulz-Dürrenmettstetten (DE)
(74) Vertreter: DREISS Patentanwälte PartG mbB

(57) **Zusammenfassung**

Die Erfindung betrifft eine Handhabungsanlage (10), umfassend eine Trägerstruktur (12) welche einen Arbeitsraum (22) zumindest abschnittsweise begrenzt, wenigstens eine entlang der Trägerstruktur verfahrbare mobile Handhabungseinheit (26) zum Spannen und/oder Greifen eines in dem Arbeitsraum angeordneten Gegenstands, wobei die mobile Handhabungseinheit wenigstens eine Laufkomponente (33) aufweist, mit der die mobile Handhabungseinheit an einer dem Arbeitsraum zugewandten Seite der Trägerstruktur entlang fährt, und wobei die mobile Handhabungseinheit eine Antriebseinrichtung zum Antreiben der wenigstens einen Laufkomponente aufweist, eine Halteeinrichtung zum Bereitstellen einer Haltekraft, insbesondere Anziehungskraft, zwischen der mobilen Handhabungseinheit und der Trägerstruktur.

## Beschreibung

Die Erfindung betrifft eine Handhabungsanlage umfassend eine Trägerstruktur und wenigstens eine relativ zu der Trägerstruktur verfahrbare mobile Handhabungseinheit.

Handhabungsanlagen sind in vielfältiger Weise aus dem Stand der Technik bekannt und dienen unter anderem dazu, Gegenstände, bspw. Werkstücke, aus einem Quellbereich, bspw. einem Ausgang einer Produktionsmaschine, zu greifen und an einen Zielbereich, bspw. ein Lager, zu überführen.

Ein beispielhaftes Anwendungsgebiet ist die automatisierte Entnahme von geschnittenen oder gestanzten Teilen aus einer Bearbeitungsmaschine, bspw. einer Laserschneidanlage. Hierbei besteht die Schwierigkeit, dass die zu greifenden Teile oftmals eine sehr unterschiedliche Geometrie aufweisen und sich auch chargenabhängig Dimension und Gewicht ändern können. Dies macht es schwer, einen Standardprozess für die Handhabung zu implementieren.

Aus dem Stand der Technik sind beispielsweise Portallösungen bekannt, bei denen eine Greifvorrichtung an einem Portalkran befestigt ist. Ebenso sind Schwenkkranlösungen mit Sauggreifvorrichtungen bekannt. Weiterhin sind Industrieroboter bekannt, die mit einer Greifvorrichtung ausgestattet sind und optional auf einem Schienensystem uniaxial verlagerbar sind.

Die bekannten Systeme sind jedoch nur bedingt flexibel und können oftmals nur mit vergleichsweise großem konstruktivem Aufwand an veränderte Anforderungen, beispielsweise hinsichtlich einer Größe des Handhabungsbereichs, einer Greifleistung oder einer Traglast anpassbar.

Die Erfindung beschäftigt sich mit der Aufgabe, eine Handhabungsanlage bereitzustellen, welche die Nachteile des Standes der Technik überwindet.

Diese Erfindung wird durch eine Handhabungsanlage mit den Merkmalen des Anspruchs 1 gelöst.

Die Handhabungsanlage weist eine Trägerstruktur, insbesondere in Form einer Trägerplatte, auf. Die Trägerstruktur begrenzt einen Arbeitsraum zumindest abschnittsweise, insbesondere in vertikaler Richtung, weiter insbesondere nach oben.

Die Handhabungsanlage weist außerdem wenigstens eine, vorzugsweise mehr als eine, mobile Handhabungseinheit auf.

Die mobile Handhabungseinheit ist dazu ausgebildet, einen in dem Arbeitsraum angeordneten Gegenstand zu greifen und/oder einzuspannen. Insbesondere kann die mobile Handhabungseinheit eine Greifvorrichtung und/oder eine Spannvorrichtung aufweisen.

Die mobile Handhabungseinheit ist an einer dem Arbeitsraum zugewandten (Innen)Seite der Trägerstruktur angeordnet.

Die mobile Handhabungseinheit ist entlang der Trägerstruktur verfahrbar angeordnet, insbesondere in zumindest zwei, vorzugsweise zumindest vier, unterschiedlichen Richtungen, besonders bevorzugt in beliebigen Richtungen.

Die mobile Handhabungseinheit weist, insbesondere an einer der Greifvorrichtung und/oder Spannvorrichtung gegenüberliegenden Seite, wenigstens eine, insbesondere drehbar gelagerte Laufkomponente, insbesondere in Form eines Rads oder einer Kette auf. Die mobile Handhabungseinheit ist derart an der Trägerstruktur angeordnet, dass die wenigstens eine Laufkomponente an der dem Arbeitsraum zugewandten (Innen)Seite der Trägerstruktur anliegt. Insbesondere fährt die mobile Handhabungseinheit mit der wenigstens einen Laufkomponente auf der dem Arbeitsraum zugewandten (Innen)Seite der Trägerstruktur. Die mobile Handhabungseinheit ist insbesondere als Roboterwagen ausgebildet.

Die mobile Handhabungseinheit weist vorzugsweise außerdem eine Antriebseinrichtung zum Antreiben der wenigstens einen Laufkomponente auf. Die Antriebseinrichtung kann insbesondere einen Elektromotor aufweisen.

Die mobile Handhabungseinheit ist an der Trägerstruktur durch eine Haltekraft gehalten. Die Haltekraft wirkt insbesondere in einer zu einer Verfahrrichtung der mobilen Handhabungseinheit orthogonalen Richtung. Insbesondere weist die Handhabungsanlage eine Halteeinrichtung auf, welche dazu ausgebildet ist, eine zwischen der mobilen Handhabungseinheit und der Trägerstruktur wirkende Haltekraft, insbesondere Anziehungskraft, bereitzustellen, mittels welcher die mobile Handhabungseinheit an der Trägerstruktur gehalten ist.

Eine solche Ausgestaltung einer Handhabungsanlage mit einer Trägerstruktur und einer Mehrzahl von daran gehaltenen und flexibel verfahrbaren mobilen Handhabungseinheiten ermöglicht einen besonders flexiblen Einsatz der Handhabungsanlage. Insbesondere kann die Handhabungsanlage auf einfache und kostengünstige Weise an neue Handhabungsanforderungen angepasst werden. Beispielsweise kann eine Greifleistung (üblicherweise in Greifevents/Picks pro Stunde angegeben) und /oder eine Traglast der Handhabungsanlage auf einfache Weise dadurch verändert werden, dass mehr oder weniger mobile Handhabungseinheiten an der Trägerstruktur angeordnet werden. Dadurch, dass die mobile Handhabungseinheit über wenigstens ein Rad an der Trägerstruktur fährt und mittels einer durch die Halteeinrichtung bereitgestellten Haltekraft gehalten ist, ist eine große Bewegungsfreiheit der mobilen Handhabungseinheit geschaffen. Insbesondere sind Verfahrwege der mobilen Handhabungseinheit nicht durch Schienen oder andere strukturelle Randbedingungen vorgegeben, was im Stand der Technik regelmäßig zu Einschränkungen führt. Dadurch, dass die mobile Handhabungseinheit flexibel verfahrbar ist, ist auch ein sogenanntes "Schwarmgreifen" ermöglicht, d.h. dass mehrere mobile Handhabungseinheiten einen Gegenstand gemeinsam handhaben - bspw., weil der Gegenstand für eine einzelne mobile Handhabungseinheit zu groß oder zu schwer wäre. Beispielsweise können mit der gleichen Handhabungsanlage ganze Stahlplatten gegriffen werden, einer Bearbeitungsmaschinen, bspw. einer Laserschnittmaschine, zugeführt werden und im Anschluss die geschnittenen Teile gehandhabt werden.

Die Laufkomponente kann insbesondere eine umlaufende Lauffläche aufweisen. Die Laufkomponente kann als Rad ausgebildet sein. Alternativ kann die Laufkomponente als umlaufendes Band oder Kette ausgebildet sein. Vorzugsweise handelt es sich bei der Laufkomponente um ein Rad. Vorzugsweise rollt die Laufkomponente mit einer Lauffläche auf der Trägerstruktur ab.

Die Handhabungsanlage weist vorzugsweise einen in dem Arbeitsraum angeordneten Quellbereich (Aufnahmebereich) zur Aufnahme von Gegenständen und einen in dem Arbeitsraum angeordneten Zielbereich zur Aufnahme von Gegenständen auf. Dann können die Mobile Handhabungseinheit jeweils dazu ausgebildet sein, Gegenstände aus dem Quellbereich in den Zielbereich zu überführen. Bei dem Quellbereich kann es sich beispielsweise um einen Ausgang einer Bearbeitungsmaschine handeln. Bei dem Quellbereich kann es sich auch um einen Lagerort Bei dem Zielbereich kann es sich beispielsweise um einen Lagerort handeln.

Der Quellbereich und/oder der Zielbereich können jeweils eine Ablage, insbesondere Aufnahme, für Gegenstände aufweisen. Die Ablage kann beispielsweise ein Behälter, z.B. Aufnahmebox, oder eine Platte, z.B. Tisch, sein. Im Rahmen einer vorteilhaften Weiterbildung kann ein Abstand zwischen der Ablage des Quellbereichs und/oder der Ablage des Zielbereichs und der Trägerstruktur veränderbar sein. Dies ermöglicht es beispielsweise bei sensiblen oder besonders schweren Gegenständen die Ablage näher an die Mobile Handhabungseinheit zu fahren, um eine Fallhöhe beim Ablegen des Gegenstands zu reduzieren. Insbesondere können die Ablage des Quellbereichs und/oder die Ablage des Zielbereichs vertikal verstellbar ausgebildet sein. Zusätzlich oder alternativ ist es auch denkbar, dass ein oberhalb des Quellbereich angeordneter Aufnahmebereich der Trägerstruktur und/oder ein oberhalb des Zielbereichs angeordneter Ablagebereich der Trägerstruktur entlang der vertikalen Richtung verstellbar ausgebildet ist.

Die Haltekraft kann zumindest anteilig durch eine Magnetkraft bereitgestellt sein. Insofern kann die Halteeinrichtung dazu ausgebildet sein, eine zwischen der mobilen Handhabungseinheit und der Trägerstruktur wirkende Magnetkraft zu erzeugen.

Alternativ oder zusätzlich kann die Haltekraft zumindest anteilig durch eine Saugkraft bereitgestellt sein. Insofern kann die Halteeinrichtung dazu ausgebildet sein, eine zwischen der mobilen Handhabungseinheit und der Trägerstruktur wirkende Saugkraft zu erzeugen. Beispielsweise kann die mobile Handhabungseinheit ein oder mehrere Saugvorrichtungen aufweisen, welche dazu ausgebildet sind, die Trägerstruktur anzusaugen und somit eine Haltekraft zu erzeugen.

Alternativ oder zusätzlich kann die Haltekraft zumindest anteilig durch eine Adhäsionskraft bereitgestellt sein. Insofern kann die Halteeinrichtung dazu ausgebildet sein, eine zwischen der mobilen Handhabungseinheit und der Trägerstruktur wirkende bereitzustellen. Insbesondere kann die mobile Handhabungseinheit eine Adhäsionsstruktur, insbesondere Gecko-Struktur, aufweisen.

Die Haltekraft kann durch lediglich eine von Magnetkraft, Saugkraft und Adhäsionskraft bereitgestellt sein. Die Haltekraft kann auch aus einer Kombination von Magnetkraft, Saugkraft und Adhäsionskraft bereitgestellt sein. Vorzugsweise handelt es sich bei der Haltekraft um eine Magnetkraft.

Die Haltekraft ist insbesondere größer als eine Gewichtskraft der mobilen Handhabungseinheit. Insbesondere ist die Haltekraft größer als eine Summe aus der Gewichtskraft einer mobilen Handhabungseinheit, einer maximalen Traglast der mobilen Handhabungseinheit und optional eines Sicherheitsfaktors. Bei einer Anordnung, in welcher die mobile Handhabungseinheit von der Trägerstruktur nach unten hängt, kann insofern sichergestellt werden, dass die Handhabungseinheit, insbesondere auch mit daran gehaltenem Gegenstand, nicht herabfällt. Die Haltekraft kann insbesondere der Schwerkraft entgegenwirken.

Die Halteeinrichtung weist insbesondere wenigstens eine erste Haltekomponente und wenigstens zweite Haltekomponente auf, wobei die Haltekraft durch Zusammenwirken der ersten Haltekomponente mit der zweiten Haltekomponente bereitgestellt ist. Beispielsweise kann die wenigstens eine erste Haltekomponente oder die wenigstens eine zweite Haltekomponente ein permanentmagnetisches Material aufweisen und die andere Haltekomponente kann ein magnetisierbares, d.h. magnetisch polarisierbares, Material, insbesondere Stahl, aufweisen. Durch Zusammenwirken der ersten Haltekomponente und der zweiten Haltekomponente kann dann eine Magnetkraft bereitgestellt werden.

Die wenigstens eine erste Haltekomponente ist an der Handhabungseinheit vorgesehen (Handhabungseinheit-seitige Haltekomponenten). Vorzugsweise ist die wenigstens eine erste Haltekomponente durch die Laufkomponente (oder wenigstens eine der Laufkomponenten) der mobilen Handhabungseinheit gebildet oder an der Laufkomponente (oder an wenigstens einer der Laufkomponenten) der mobilen Handhabungseinheit angeordnet. Die wenigstens eine zweite Haltekomponente ist an der Trägerstruktur vorgesehen (Trägerstruktur-seitige Haltekomponente). Die wenigstens eine zweite Haltekomponente kann von der Trägerstruktur separat bereitgestellt sein und insbesondere an der Trägerstruktur befestigt sein. Vorzugsweise ist die wenigstens eine zweite Haltekomponente durch die Trägerstruktur selbst bereitgestellt.

Insbesondere wirkt die Haltekraft zwischen der Trägerstruktur und der wenigstens einen Laufkomponente der mobilen Handhabungseinheit. Auf diese Weise wird einerseits eine zuverlässige Haltekraft bereitgestellt. Andererseits begünstigt eine solche Ausgestaltung eine effiziente und insbesondere schnelle Verlagerung der mobilen Handhabungseinheit. Dies in Zusammenhang mit der vorstehend beschriebenen Bewegungsfreiheit ermöglicht es Gegenstände unterschiedlicher Größe und Geometrie auf einfache Weise schnell und kostengünstig zu handhaben.

Im Rahmen einer vorteilhaften Ausgestaltung ist die Laufkomponente der mobilen Handhabungseinheit oder zumindest eine der Laufkomponenten der mobilen Handhabungseinheit als Haftrad ausgebildet, welches mittels Magnetkraft, Saugkraft und/oder Adhäsionskraft an der Trägerstruktur haftet.

Im Rahmen einer ersten vorteilhaften Realisierungsform kann die Trägerstruktur ein permanentmagnetisches, insbesondere ferromagnetisches, Material umfassen, insbesondere daraus hergestellt sein, und die Laufkomponente oder zumindest eine der Laufkomponenten der mobilen Handhabungseinheit kann ein magnetisierbares, d.h. magnetisch polarisierbares, Material, insbesondere Stahl, umfassen, insbesondere daraus hergestellt sein. Insbesondere kann die Trägerstruktur als Platte aus einem permanentmagnetischen Material (Magnetplatte oder Magnettafel) ausgebildet sein. Alternativ kann die Trägerstruktur eine Platte und eine Mehrzahl von an der Platte angeordneten Magnetelementen aus einem permanentmagnetischen Material aufweisen, insbesondere wobei die Magnetelemente über die Platte verteilt angeordnet sind. Die Platte kann dann aus einem nicht-magnetischen Material gebildet sein. Insbesondere kann die Laufkomponente oder zumindest eine der Laufkomponenten, insbesondere alle Laufkomponenten, der mobilen Handhabungseinheit als Stahlrad (d.h. als Rad, welches zumindest abschnittsweise aus Stahl hergestellt ist) ausgebildet sein.

Im Rahmen einer zweiten, bevorzugten Realisierungsform kann die Laufkomponente oder zumindest eine der Laufkomponenten der mobilen Handhabungseinheit ein permanentmagnetisches, insbesondere ferromagnetisches, Material umfassen, insbesondere daraus hergestellt sein, und die Trägerstruktur kann ein magnetisierbares Material, insbesondere Stahl, umfassen, insbesondere daraus hergestellt sein.

Besonders vorteilhaft ist es, wenn die Laufkomponente oder zumindest eine der Laufkomponenten der mobilen Handhabungseinheit als magnetisches Haftrad (auch als permanentmagnetisches Haftrad oder Magnetrad bezeichnet) ausgebildet ist. Solche magnetischen Hafträder sind beispielsweise von thyssenkrupp Magnettechnik oder der Tridelta Magnetsysteme GmbH erhältlich.

Bei einer solchen Ausgestaltung mit Magneträdern an der mobilen Handhabungseinheit kann dann die Trägerstruktur insbesondere als Platte aus einem magnetisierbaren Material, vorzugsweise als Metallplatte, weiter vorzugsweise als Stahlplatte, ausgebildet sein. Dies schließt jedoch nicht aus, dass die Platte möglicherweise einen nicht magnetisch magnetisierbaren Überzug, bspw. eine Kunststoffbeschichtung oder ähnliches, aufweist. Alternativ kann die Trägerstruktur eine Platte und eine Mehrzahl von an der Platte angeordneten Metallelementen aufweisen. Vorzugsweise sind dann die Metallelemente über die Platte verteilt angeordnet. Die Platte kann dann aus einem nicht-magnetischen Material gebildet sein.

Es erweist sich als vorteilhaft, wenn die mobile Handhabungseinheit mindestens zwei angetriebene Magneträder aufweist. Auf diese Weise können besondere hohe Beschleunigungen erzielt werden ohne eine Haltekraft zu beinträchtigen, was sich wiederum positiv auf eine Greifleistung (Pickrate) der Handhabungsanlage auswirkt.

Weiter erweist es sich als voreilhaft, wenn die mobile Handhabungseinheit wenigstens ein nicht angetriebenes (passives) Magnetrad aufweist. Das nicht-angetriebene Magnetrad kann zum Lenken der mobilen Handhabungseinheit ausgebildet sein. Beispielsweise kann das nicht-angetriebene Magnetrad um eine zu der Radachse orthogonale Schwenkachse schwenkbar an der mobilen Handhabungseinheit angeordnet sein.

Im Rahmen eines weiteren Aspekts kann die Laufkomponente oder zumindest eine der Laufkomponenten, insbesondere alle Laufkomponenten, der mobilen Handhabungseinheit eine Mehrzahl von Saugnäpfen aufweisen. Insbesondere kann die Laufkomponente als Saugerrad, umfassend eine Mehrzahl von Saugnäpfen, ausgebildet sein. Bei einer solchen Ausgestaltung kann dann über die Saugnäpfe (bei Kontakt mit der Trägerstruktur) eine Saugkraft bereitstellt werden. Eine beispielhafte Realisierungsform eines Sauggerrads kann ein Trägerrad aufweisen, an dessen Umfangsfläche mehrere Saugnäpfe angeordnet sind. Bei einer Ausgestaltung mit Saugnäpfen, insbesondere Saugerrad, ist dann die wenigstens eine erste Haltekomponente insbesondere durch die Saugnäpfe bereitgestellt und die zweite Haltekomponente ist durch die Trägerstruktur selbst bereitgestellt. Die Saugnäpfe können aktiv mit Unterdruck beaufschlagt sein. Beispielsweise ist es denkbar, dass die mobile Handhabungseinheit eine Unterdruckerzeugungseinrichtung zum Erzeugen von Unterdruck aufweist. Die Saugnäpfe können auch als Passivsauger ausgebildet sein. Insofern kann ein Unterdruck lediglich durch Kontakt mit der Trägerstruktur unter Verformung des Saugnapfes erzeugt werden.

Insbesondere wird auch eine Handhabungsanlage vorgeschlagen, umfassend
- eine Trägerstruktur, insbesondere Trägerplatte, welche einen Arbeitsraum zumindest abschnittsweise begrenzt,
- wenigstens eine, vorzugsweise mehr als eine, entlang der Trägerstruktur, insbesondere in beliebigen Richtungen, verfahrbare mobile Handhabungseinheit zum Spannen und/oder Greifen eines in dem Arbeitsraum angeordneten Gegenstands,
wobei die mobile Handhabungseinheit wenigstens eine Laufkomponente, insbesondere Saugerrad, umfassend eine Mehrzahl von Saugnäpfen aufweist, wobei die mobile Handhabungseinheit mit der Laufkomponente, insbesondere dem Saugerrad, derart an einer dem Arbeitsraum zugewandten Seite der Trägerstruktur entlangfährt, dass die Saugnäpfe eine, insbesondere eine Gewichtskraft der mobilen Handhabungseinheit zumindest teilweise kompensierende, Saugkraft ausüben.

Im Rahmen eines weiteren Aspekts kann die Laufkomponente oder zumindest eine der Laufkomponenten, insbesondere alle Laufkomponenten, der mobilen Handhabungseinheit eine Adhäsionsstruktur, insbesondere Gecko-Struktur, aufweisen. Insbesondere kann die Laufkomponente als Adhäsionsrad ausgebildet sein, welches an einer Lauffläche eine Adhäsionsstruktur, insbesondere Gecko-Struktur, aufweist. Über eine solche Adhäsionsstruktur kann dann in Kontakt mit der Trägerstruktur eine Adhäsionskraft bereitgestellt werden. Beispielsweise kann das Adhäsionsrad ein Trägerrad aufweisen, an dessen Umfangsfläche eine Adhäsionsstruktur, insbesondere Gecko-Struktur, angeordnet ist. Bei einer Ausgestaltung mit Adhäsionsstruktur, insbesondere Adhäsionsrad, ist die wenigstens eine erste Haltekomponente dann insbesondere durch die Adhäsionsstruktur bereitgestellt und die zweite Haltekomponente ist durch die Trägerstruktur selbst bereitgestellt.

Insbesondere wird auch eine Handhabungsanlage vorgeschlagen, umfassend
- eine Trägerstruktur, insbesondere Trägerplatte, welche einen Arbeitsraum zumindest abschnittsweise begrenzt,
- wenigstens eine, vorzugsweise mehr als eine, entlang der Trägerstruktur, insbesondere in beliebigen Richtungen, verfahrbare mobile Handhabungseinheit zum Spannen und/oder Greifen eines in dem Arbeitsraum angeordneten Gegenstands,
wobei die mobile Handhabungseinheit wenigstens eine Laufkomponente, insbesondere Adhäsionsrad, umfassend eine Adhäsionsstruktur, insbesondere Gecko-Struktur, aufweist, wobei die mobile Handhabungseinheit mit der Adhäsionsstruktur in Kontakt mit einer dem Arbeitsraum zugewandten Seite der Trägerstruktur ist, sodass eine zwischen Handhabungseinheit und Trägerstruktur wirkende Adhäsionskraft bereitgestellt ist.

Im Rahmen einer vorteilhaften Weiterbildung kann die Halteeinrichtung, insbesondere die mobile Handhabungseinheit, weiter insbesondere zusätzlich zu einer Ausgestaltung der wenigstens einen Laufkomponente als Haftrad (Magnetrad, Saugerrad oder Adhäsionsrad), eine von der wenigstens einen Laufkomponente separat ausgebildete Saugeinrichtung, insbesondere Saugerplatte oder Bernoulli-Sauger aufweisen. Die Saugeinrichtung ist insbesondere dazu ausgebildet, die Trägerstruktur anzusaugen und somit eine Anziehungskraft zwischen mobiler Handhabungseinheit und Trägerstruktur bereitzustellen. Die durch die Saugeinrichtung bereitgestellte Anziehungskraft kann insofern zu der durch die Halteeinrichtung bereitgestellte Haltekraft beitragen.

Weiterhin kann es sich als vorteilhaft erweisen, wenn die Handhabungsanlage zusätzlich zu der Halteeinrichtung eine Sicherungseinrichtung aufweist, welche dazu ausgebildet ist, die mobile Handhabungseinheit zumindest an ausgewählten Positionen entlang der Trägerstruktur gegen ein Herabfallen zu sichern, insbesondere an der Trägerstruktur zu fixieren. Die Sicherungseinrichtung kann insofern einen zusätzlichen Schutz gegen ein Ablösen der Handhabungseinheit von der Trägerstruktur dienen. Dies kann insbesondere dann von Vorteil sein, wenn die Trägerstruktur den Arbeitsraum nach oben hin begrenzt und die Handhabungseinheit von der Trägerstruktur nach unten hängt. Beispielsweise kann bei einem kollaborierenden Betrieb von Handhabungsanlage und Mensch ein besonderer Schutz bereitgestellt werden. So ist es beispielsweise denkbar, dass in dem Arbeitsraum Sicherheitsbereiche definiert sind, in welchen die Sicherungseinrichtung aktiv ist.

Die Sicherungseinrichtung kann an der mobilen Handhabungseinheit angeordnet sein. Beispielsweise kann die Handhabungseinheit einen Elektromagneten oder einen aus- und wieder einfahrbaren mechanischen Riegel aufweisen. Es ist auch denkbar, dass die Trägerstruktur an ausgewählten Positionen (Sicherheitsbereichen) eine Sicherungseinrichtung aufweist, bspw. in Form einer mechanischen Verriegelung oder eines Fangnetzes, welche ein Herabfallen der Handhabungseinheit verhindert.

Die Trägerstruktur kann verschieden ausgebildet sein. Vorzugsweise ist die Trägerstruktur als Trägerplatte ausgebildet. Der Begriff "Trägerplatte" schließt jedoch nicht aus, dass die Trägerplatte lokale Öffnungen aufweist. Beispielsweise kann die Trägerplatte als Lochblech ausgebildet sein. Vorzugsweise weist die Trägerplatte aber eine durchgehend geschlossene Fläche auf. Die Trägerplatte auch als Trägernetz ausgebildet sein. Die Trägerplatte kann eben ausgebildet sein. Die Trägerplatte kann auch gebogen oder wellig ausgebildet sein.

Im Rahmen einer vorteilhaften Ausgestaltung kann die Trägerstruktur den Arbeitsraum in vertikaler Richtung nach oben hin begrenzen. Insofern kann die Trägerstruktur eine Deckenstruktur des Arbeitsraums bilden. Dann kann die wenigstens eine mobile Handhabungseinheit an einer dem Arbeitsraum zugewandten Unterseite der Trägerstruktur angeordnet sein und mittels der Haltekraft, insbesondere mittels Magnetkraft, gegen ein Herabfallen gehalten sein. Die wenigstens eine mobile Handhabungseinheit kann insbesondere nach unten, d.h. in Schwerkraftrichtung, hängend an der Trägerstruktur angeordnet sein. Die Halteeinrichtung ist dann insbesondere derart ausgebildet, dass zwischen der mobilen Handhabungseinheit und der Trägerstruktur, insbesondere zwischen der wenigstens einen Laufkomponente der mobilen Handhabungseinheit und der Trägerstruktur, eine der Schwerkraft entgegenwirkende Haltekraft wirkt.

Insbesondere wird auch eine Handhabungsanlage vorgeschlagen, umfassend
- eine, insbesondere horizontal erstreckte, Trägerstruktur, insbesondere Trägerplatte, welche einen Arbeitsraum in vertikaler Richtung nach oben hin begrenzt,
- wenigstens eine, vorzugsweise wenigstens zwei, mobile Handhabungseinheit zum Greifen und/oder Spannen eines in dem Arbeitsraum angeordneten Gegenstands, wobei die mobile Handhabungseinheit an einer dem Arbeitsraum zugewandten Unterseite der Trägerstruktur angeordnet und entlang der Trägerstruktur, insbesondere in beliebigen Richtungen, verfahrbar ist, wobei die mobile Handhabungseinheit wenigstens eine Laufkomponente, insbesondere Rad, aufweist, mit dem sie an der Trägerstruktur entlang fährt, wobei die mobile Handhabungseinheit mittels einer Haltekraft, insbesondere Magnetkraft, an der Trägerstruktur gegen ein Herabfallen gehalten ist.

Die Trägerstruktur kann ein oder mehrere, insbesondere zusammenhängende, Abschnitte aufweisen. Jeder Abschnitt kann durch eine Platte, insbesondere Stahlplatte, bereitgestellt sein.

Bei manchen Ausgestaltungen weist die Trägerstruktur, insbesondere Trägerplatte, einen Deckenabschnitt auf, der den Arbeitsraum in vertikaler Richtung nach oben hin begrenzt. Der Deckenabschnitt kann sich horizontal erstrecken. Der Deckenabschnitt kann auch schräg verlaufen. Die mobile Handhabungseinheit kann dann derart angeordnet oder dazu ausgebildet sein, um an einer dem Arbeitsraum zugewandten Unterseite des Deckenabschnitts entlang zu fahren.

Alternativ oder zusätzlich kann die Trägerstruktur, insbesondere Trägerplatte, einen Bodenabschnitt aufweisen, der den Arbeitsraum in vertikaler Richtung nach unten hin begrenzt. Der Bodenabschnitt kann sich horizontal erstrecken. Der Bodenabschnitt kann auch schräg verlaufen. Die mobile Handhabungseinheit kann dann derart angeordnet oder dazu ausgebildet sein, um an einer dem Arbeitsraum zugewandten Oberseite des Bodenabschnitts entlang zu fahren.

Alternativ oder zusätzlich kann die Trägerstruktur, insbesondere Trägerplatte, einen Seitenabschnitt aufweisen, der den Arbeitsraum seitlich, d.h. in horizontaler Richtung, begrenzt. Der Seitenabschnitt kann sich entlang der Vertikalen erstrecken. Der Seitenabschnitt kann auch schräg verlaufen. Die mobile Handhabungseinheit kann dann derart angeordnet oder dazu ausgebildet sein, um an einer dem Arbeitsraum zugewandten (Innen)Seite des Seitenabschnitts entlang zu fahren.

Bei Ausgestaltungen mit Deckenabschnitt und Seitenabschnitt kann es ferner vorteilhaft sein, wenn die Trägerstruktur einen, insbesondere gebogen verlaufenden, Decken-Übergangsabschnitt aufweist, welcher den Deckenabschnitt mit dem Seitenabschnitt verbindet. Dies ermöglicht es der mobilen Handhabungseinheit, ohne Umsetzen, zwischen Deckenabschnitt und Seitenabschnitt zu verfahren. Beispielsweise ist es denkbar, dass die mobile Handhabungseinheit an einer Position entlang des Seitenabschnitts beladen wird und dann über den Deckenabschnitt zu einem Zielbereich im Arbeitsraum gefahren wird.

Bei Ausgestaltungen mit Seitenabschnitt und Bodenabschnitt kann es ferner vorteilhaft sein, wenn die Trägerstruktur einen, insbesondere gebogen verlaufenden, Boden-Übergangsabschnitt aufweist, welcher den Bodenabschnitt mit dem Seitenabschnitt verbindet. Dies ermöglicht es der mobilen Handhabungseinheit, ohne Umsetzen, zwischen Bodenabschnitt und Seitenabschnitt zu verfahren.

Die Handhabungsanlage kann eine oder mehrere Stützen aufweisen, mittels welcher die Trägerstruktur auf einem Träger, bspw. einem Gebäudeboden oder einem Maschinenbett, abgestützt ist. Alternativ ist es bspw. auch denkbar, dass die Trägerstruktur an einer Gebäudedecke oder einem Gebäudeboden verankert ist.

Im Rahmen einer vorteilhaften Weiterbildung kann die Trägerstruktur, insbesondere der Deckenabschnitt und/oder der Bodenabschnitt, zumindest abschnittsweise höhenverstellbar, d.h. entlang der vertikalen Richtung, verstellbar ausgebildet sein. Bei einer Ausgestaltung der Trägerstruktur als Trägerplatte kann die Trägerplatte entlang der vertikalen Richtung verstellbar ausgebildet sein. Insofern kann eine Höhe der Trägerplatte verstellt werden. Eine solche Ausgestaltung ermöglicht einer Bedienperson bei Bedarf einen einfachen Zugang zu der wenigstens einen mobilen Handhabungseinheit. Beispielsweise kann auf diese Weise eine manuelle Beladung der mobilen Handhabungseinheit erfolgen.

Bei einer Ausgestaltung mit mehreren Handhabungseinheiten, können diese dazu ausgebildet sein, voneinander unabhängig Gegenstände zu greifen. Beispielsweise können kleine Bauteile von einer mobilen Handhabungseinheit alleine gegriffen werden.

In vorteilhafter Weise können bei Ausgestaltungen der Handhabungsanlage mit mehreren mobilen Handhabungseinheiten diese derart ausgebildet und insbesondere aufeinander abgestimmt sein, um einen Gegenstand gemeinsam greifen zu können. Dies ermöglicht es beispielsweise Teile, deren Gewicht und/oder Abmessungen zu groß sind, um mit einer einzelnen mobilen Handhabungseinheit gehandhabt zu werden, durch zwei oder mehrere mobile Handhabungseinheiten gemeinsam zu handhaben (sog. "Schwarmgreifen").

Wie vorstehend erwähnt, weist die mobile Handhabungseinheit insbesondere eine Greifvorrichtung oder Spannvorrichtung auf, vorzugweise eine Greifvorrichtung. Die Greif- oder Spannvorrichtung ist vorzugsweise an einer dem wenigstens einen Rad gegenüberliegenden Seite des Handhabungseinheit angeordnet.

Es sind unterschiedliche Greifvorrichtungen denkbar. Beispielsweise kann die Greifvorrichtung eine mechanische Greifvorrichtung, bspw. umfassend ein oder mehrere mechanisch verstellbare Greiferfinger, sein. Die Greifvorrichtung kann auch ein Magnetgreifer sein. Die Greifvorrichtung kann auch ein Nadelgreifer, insbesondere für die Handhabung von Textilien und/oder Kohlenstofffasern, sein.

Vorzugsweise handelt es sich bei der Greifvorrichtung um einen Oberflächengreifer, insbesondere Magnetgreifer, Sauggreifer oder Adhäsionsgreifer, handeln. Die Greifvorrichtung kann ein Magnetgreifer sein. Die Greifvorrichtung kann ein Adhäsionsgreifer, insbesondere Gecko-Greifer, sein.

Besonders bevorzugt handelt es sich bei der Greifvorrichtung zumindest einer mobilen Handhabungseinheit, insbesondere aller mobilen Handhabungseinheiten, um eine Sauggreifvorrichtung mit wenigstens einer Saugstelle zum Ansaugen eines Gegenstands. Insofern kann die mobile Handhabungseinheit eine Sauggreifvorrichtung aufweisen. Insbesondere kann die Sauggreifvorrichtung eine Mehrzahl von einzeln, d.h. voneinander unabhängig, aktivierbaren Saugstellen aufweisen.

Im Rahmen einer vorteilhaften Realisierungsform kann die Sauggreifvorrichtung eine Mehrzahl von Greifeinheiten aufweisen, welche jeweils einen entlang einer Hubachse aus- und wieder einfahrbaren Hubkolben und einen mit dem Hubkolben bewegungsgekoppelten Sauger aufweisen. Der Hubkolben kann durch Beaufschlagen mit Betriebsfluid, insbesondere Druckluft, aus einer eingefahrenen Konfiguration in eine ausgefahrene Konfiguration entlang der Hubachse überführbar sein. Vorzugsweise ist die wenigstens eine Greifeinheit derart ausgebildet, dass in der eingefahrenen Konfiguration des Hubkolbens eine Unterdruckversorgung des Saugers unterbrochen ist und in der ausgefahrenen Konfiguration eine Unterdruckversorgung freigegeben ist. Durch Aus- bzw. Einfahren lässt sich insofern eine Greifwirkung der Greifeinheit aktivieren. Eine beispielhafte Ausgestaltung einer solchen Sauggreifvorrichtung ist in der DE 10 2023 109 048 A1 der Anmelderin beschrieben, deren Offenbarungsgehalt hiermit durch Verweis einbezogen wird.

Im Rahmen einer vorteilhaften Weiterbildung kann eine mit Sauggreifvorrichtung ausgestattete mobile Handhabungseinheit außerdem eine Unterdruckerzeugungseinrichtung zur Versorgung der Sauggreifvorrichtung mit Unterdruck aufweisen. Die Unterdruckerzeugungseinrichtung kann bspw. pneumatisch oder elektrisch betrieben sein. Vorzugsweise handelt es sich bei der Unterdruckerzeugungseinrichtung um eine elektrisch betriebene Unterdruckerzeugungseinrichtung ("elektrischer Vakummerzeuger"). Eine solche elektrische Unterdruckerzeugungseinrichtung ist vergleichsweise kompakt aufgebaut und ermöglicht insbesondere eine autarke Unterdruckerzeugung in der mobilen Handhabungseinheit. Bei einer Ausgestaltung der Greifvorrichtung als Sauggreifvorrichtung mit Hubeinheiten kann es weiter vorteilhaft sein, wenn die elektrische Unterdruckerzeugungseinrichtung außerdem dazu ausgebildet ist, Druckluft zu erzeugen, um die Hubeinheiten auszufahren.

Es ist denkbar, dass eine mobile Handhabungseinheit mehrere Greifvorrichtungen aufweist. Die Greifvorrichtung können vom selben Typ sein oder unterschiedlich ausgebildet sein. Beispielsweise ist es denkbar, dass eine mobile Handhabungseinheit eine Sauggreifvorrichtung und eine Magnetgreifvorrichtung aufweist.

Es ist denkbar, dass bei Ausgestaltungen der Handhabungsanlage mit mehreren mobilen Handhabungseinheiten alle mobilen Handhabungseinheiten den gleichen Typ Greifvorrichtung aufweisen. Es ist auch denkbar, dass die mobilen Handhabungseinheiten oder zumindest eine Teilmenge der mobilen Handhabungseinheiten unterschiedliche Greifvorrichtungen aufweisen.

Im Rahmen einer vorteilhaften Weiterbildung kann die mobile Handhabungseinheit außerdem eine Hubeinrichtung, insbesondere in Form eines Seilzugs, Scherenhubs oder einer Teleskopstange, aufweisen, an welcher die Greifvorrichtung gehaltert ist. Die Hubeinrichtung kann insbesondere dazu ausgebildet sein, einen Abstand der Greifvorrichtung zu einem Gehäuse der Handhabungseinheit zu verändern. Eine solche Ausgestaltung ermöglicht es auch größere Abstände zwischen Handhabungseinheit und zu greifendem Gegenstand zu überbrücken. Beispielsweise ist es denkbar, dass die Trägerstruktur eine Deckenstruktur des Arbeitsraums bildet, welche, insbesondere bei einem Einsatz kollabierenden Einsatz mit Menschen, mehrere Meter von einem Boden entfernt sein kann. Bei einer solchen Ausgestaltung kann dann durch den Einsatz einer Hubeinrichtung ermöglicht werden, auch auf dem Boden des Arbeitsraums gelagerte Gegenstände, bspw. Boxen, von oben zu greifen, indem die Greifvorrichtung durch die Hubeinrichtung entsprechend herabgelassen wird.

Im Rahmen eines allgemeinen Aspekts kann die mobile Handhabungseinheit einen Energiespeicher, insbesondere in Form einer Batterie oder Akku, aufweisen. Dann kann es vorteilhaft sein, wenn die Handhabungsanlage in dem Arbeitsraum eine Ladezone zum Aufladen des Energiespeichers aufweist. Insbesondere kann die mobile Handhabungseinheit derart ausgebildet sein, dass sie die Ladezone selbständig anfahren kann, bspw. wenn der Energiespeicher ein vorgegebenes Speicherlevel unterschritten hat. Der Energiespeicher kann beispielsweise zur Versorgung der Antriebseinrichtung und/oder der Unterdruckerzeugungseinrichtung ausgebildet sein. Es ist grundsätzlich auch denkbar, dass die mobile Handhabungseinheit über die Räder und/oder eine Stromversorgungsleitung mit elektrischer Energie versorgt wird.

Eine Navigation der mobilen Handhabungseinheit entlang der Trägerstruktur kann auf unterschiedliche Weise erfolgen. Beispielsweise kann die mobile Handhabungseinheit GPSgesteuert sein. Die mobile Handhabungseinheit kann auch in an sich bekannter Weise mittels Lidar- und/oder Vision-basierter Navigation gesteuert werden.

Es ist auch denkbar, dass die Trägerstruktur ein Muster aufweist, welches als Koordinatensystem für die mobile Handhabungseinheit dient oder bestimmte Bereiche der Trägerstruktur (bspw. einen Aufnahmebereich über dem Quellbereich und/oder einen Ablagebereich über dem Zielbereich) markiert. Bei einer Ausgestaltung der Trägerstruktur als Metallplatte kann das Muster beispielsweise mittels Laser erzeugte Markierungen auf der Platte aufweisen.

Die Handhabungsanlage kann eine Steuereinrichtung zur Ansteuerung der Handhabungsanlage, insbesondere der wenigstens einen mobilen Handhabungseinheit, aufweisen. Die mobile Handhabungseinheit kann ihrerseits jeweils eine, insbesondere mit der Steuereinrichtung der Handhabungsanlage zusammenwirkende, Sub-Steuereinrichtung, insbesondere zum Ansteuern der Greifvorrichtung und optional der Antriebseinrichtung und/oder der Unterdruckerzeugungseinrichtung, aufweisen. Die Steuereinrichtung der Handhabungsanlage kann eine nicht-flüchtige Speichereinrichtung aufweisen. Auf der nicht-flüchtigen Speichereinrichtung können Steueranweisungen zum Ansteuern der Handhabungsanlage, insbesondere der mobilen Handhabungseinheit, gespeichert sein. Beispielsweise kann auf der Speichereinrichtung ein Computerprogramm gespeichert sein, welches dazu ausgebildet ist, mittels künstlicher Intelligenz, eine bevorzugte Handhabungsreihenfolge zu berechnen, um in möglichst kurzer Zeit, eine Handhabungsaufgabe, insbesondere das Überführen von Gegenständen aus dem Quellbereich in den Zielbereich, durchzuführen.

Es ist auch denkbar, dass die mobile Handhabungseinheit autark gesteuert ist. Insofern kann die mobile Handhabungseinheit jeweils eine, insbesondere von einer übergeordneten Steuereinrichtung der Handhabungsanlage unabhängige, Handhabungseinheit-Steuereinrichtung aufweisen.

Es wird auch ein Verfahren zum Betreiben einer vorstehend beschriebenen Handhabungsanlage vorgeschlagen. Das Verfahren umfasst insbesondere das Greifen eines in dem Arbeitsraum, insbesondere in dem Quellbereich, der Handhabungsanlage angeordneten Gegenstands mittels mehrerer mobiler Handhabungseinheiten gemeinsam ("Schwarmgreifen").

Gemäß dem Verfahren werden zunächst wenigstens zwei mobile Handhabungseinheiten zu dem zu greifenden Gegenstand gefahren. Insbesondere werden die wenigstens zwei mobilen Handhabungseinheiten zu einer Greifposition an der Trägerstruktur gefahren, aus welcher die mobilen Handhabungseinheiten den Gegenstand, insbesondere mittels der Greifvorrichtung, greifen können. Mit anderen Worten umfasst das Verfahren insbesondere das Ansteuern der mobilen Handhabungseinheit derart, dass diese an eine Greifposition fahren, aus welcher sie den Gegenstand, insbesondere mittels ihrer jeweiligen Greifvorrichtung, greifen können. Insbesondere können die mobilen Handhabungseinheiten in einen oberhalb des Quellbereichs angeordneten Aufnahmebereich der Trägerstruktur gefahren werden.

In einem weiteren Schritt wird der Gegenstand mittels der wenigstens zwei mobilen Handhabungseinheiten, insbesondere mittel der Greifvorrichtungen, gegriffen, insbesondere sodass der Gegenstand an den wenigstens zwei mobilen Handhabungseinheiten gehalten ist. Insbesondere greifen die Greifvorrichtungen an unterschiedlichen Positionen an dem Gegenstand an.

Im Anschluss werden die wenigstens zwei mobilen Handhabungseinheiten gemeinsam, insbesondere synchronisiert, entlang der Trägerstruktur verfahren, insbesondere zu einem Zielbereich, an welchem der Gegenstand abgelegt werden soll. Das Verfahren der mobilen Handhabungseinheiten entlang der Trägerstruktur erfolgt dabei vorzugsweise derart synchronisiert, dass ein Abstand der mobilen Handhabungseinheiten voneinander konstant bleibt.

Optional wird der Gegenstand dann an dem Zielbereich abgelegt.

Vorzugsweise sind auf der nicht-flüchtigen Speichereinrichtung der vorstehend beschriebenen Steuereinrichtung der Handhabungsanlage Steueranweisungen, insbesondere in Form eines Computerprogramms, gespeichert, welche bei Ausführung die Handhabungsanlage dazu veranlassen, das vorstehend beschriebene Verfahren durchzuführen.

Insbesondere wird auch ein Computerprogrammprodukt vorgeschlagen, umfassend Befehle, die bei Ausführung auf einem Computer, insbesondere einer Steuereinrichtung, einer vorstehend beschriebenen Handhabungsanlage bewirken, dass die Handhabungsanlage das vorstehend beschriebene Verfahren ausführt. Das Computerprogrammprodukt ist insbesondere auf einer nicht-flüchtigen Speichereinrichtung gespeichert.

Die Erfindung wird im Folgenden anhand der Figuren näher erläutert. Es zeigen:
Fig. 1 vereinfachte schematische Darstellung einer beispielhaften Ausgestaltung einer Handhabungsanlage in einer Seitenansicht;
Fig. 2 vereinfachte schematische Darstellung einer mobilen Handhabungseinheit gemäß Fig. 1 in einer Draufsicht;
Fig. 3 vereinfachte schematische Darstellung einer beispielhaften Ausgestaltung einer Handhabungsanlage in einer Draufsicht;
Fig. 4 vereinfachte schematische Darstellung einer weiteren beispielhaften Ausgestaltung einer Handhabungsanlage in einer Seitenansicht;
Fig. 5A,B vereinfachte schematische Darstellungen einer weiteren beispielhaften Ausgestaltung einer mobilen Handhabungseinheit mit Saugerrädern;
Fig. 6A,B vereinfachte schematische Darstellungen einer weiteren beispielhaften Ausgestaltung einer mobilen Handhabungseinheit mit Adhäsionsrädern; und
Fig. 7A,B vereinfachte schematische Darstellungen einer weiteren beispielhaften Ausgestaltung einer mobilen Handhabungseinheit mit Kettenantrieb.

In der nachfolgenden Beschreibung sowie in den Figuren sind für identische oder einander entsprechende Merkmale jeweils dieselben Bezugszeichen verwendet.

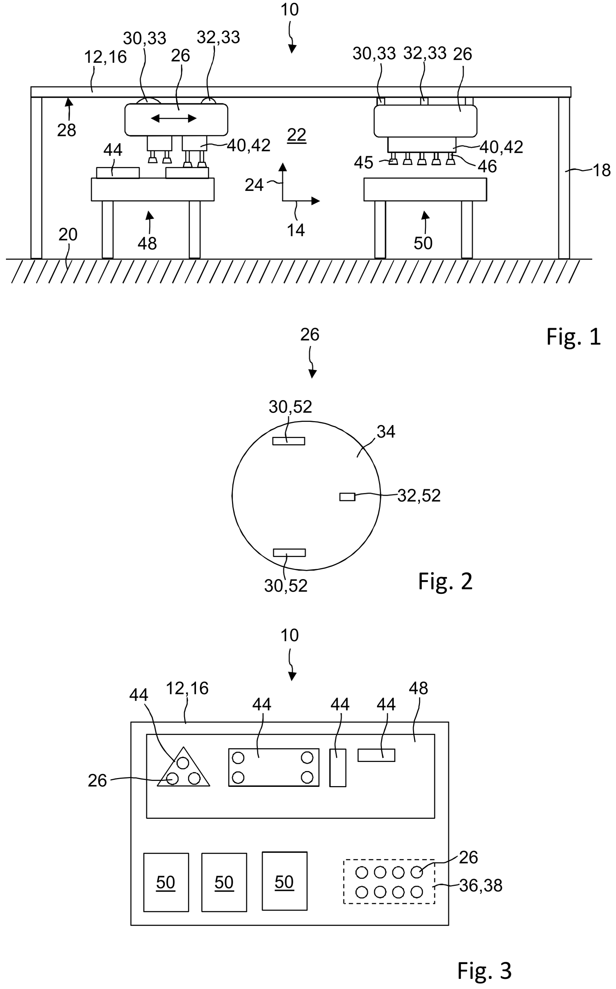

Die Figur 1 zeigt in vereinfachter schematischer Darstellung eine beispielhafte Ausgestaltung einer Handhabungsanlage, welche insgesamt mit dem Bezugszeichen 10 bezeichnet ist.

Die Handhabungsanlage 10 weist eine Trägerstruktur 12 auf. Die Trägerstruktur 12 erstreckt sich im Beispiel mit einer Haupterstreckungsrichtung in einer horizontalen Ebene (in Fig. 1 durch die horizontale Richtung 14 gezeigt).

Wie aus Figur 3 ersichtlich, ist die Trägerstruktur 12 im Beispiel rechteckig ausgebildet. Bei nicht dargestellten Ausgestaltungen kann die Trägerstruktur 12 aber auch beliebige anderen Formen aufweisen, bspw. rund oder eckig.

Beispielhaft und bevorzugt ist die Trägerstruktur 12 als Trägerplatte 16 ausgebildet. Die Trägerstruktur 12 wird daher im Folgenden als Trägerplatte 16 bezeichnet.

Wie aus Fig. 1 ersichtlich, ist die Trägerplatte 16 im Beispiel über mehrere Stützen 18 auf einem Fundament 20, bspw. einem Gebäudeboden oder einem Maschinenbett, abgestützt. Bei nicht dargestellten Ausgestaltungen kann die Trägerplatte 16 aber bspw. auch an einer Gebäudedecke oder anderweitig befestigt sein.

Die Trägerplatte 16 begrenzt einen Arbeitsraum 22 der Handhabungsanlage 10 in vertikaler Richtung 24 nach oben hin (vgl. Fig. 1). Die Trägerplatte 16 bildet insofern eine Deckenstruktur des Arbeitsraums 22.

Die Handhabungsanlage 10 weist außerdem wenigstens zwei, insbesondere mehr als zwei, mobile Handhabungseinheiten 26 auf.

Wie in Figur 1 (hier nur zwei mobile Handhabungseinheiten 26 sichtbar) ersichtlich, sind die mobilen Handhabungseinheiten 26 an einer dem Arbeitsraum 22 zugewandten Unterseite 28 der Trägerplatte 16 angeordnet. Die mobilen Handhabungseinheiten 26 "hängen" also von der Trägerplatte 16 in Schwerkraftrichtung (in Fig. 1 der vertikalen Richtung 24 entgegengesetzt) nach unten.

Die mobilen Handhabungseinheiten 26 weisen jeweils drei Räder 30, 32 auf, mittels denen die mobile Handhabungseinheiten 26 auf der Unterseite 28 der Trägerplatte 16 entlang fahren. Die Räder 30, 32 bilden Laufkomponenten 33 der Handhabungseinheit 26. Bei nicht dargestellten Ausgestaltungen können die mobilen Handhabungseinheiten 26 aber auch mehr oder weniger Räder 30, 32 aufweisen.

Im Beispiel umfassen die mobilen Handhabungseinheiten 26 jeweils zwei angetriebene Räder 30 und ein nicht angetriebenes Rad 32. Das nicht angetriebene Rad 32 ist insbesondere um eine zu der Radachse orthogonale, im Beispiel parallel zur vertikalen Richtung 14 orientierten (in Fig. 2 orthogonal zur Zeichenebene), Schwenkachse schwenkbar.

Die angetriebenen Räder 30 können gemeinsam oder voneinander unabhängig angetrieben sein. Insbesondere sind die angetriebenen Räder 30 derart voneinander unabhängig ansteuerbar, dass die Räder 30 in unterschiedliche Richtungen und optional mit unterschiedlichen Geschwindigkeiten rotieren können. Auf diese Weise ist eine einfache Richtungsänderung einer mobilen Handhabungseinheit 26 ermöglicht, sodass die mobilen Handhabungseinheiten 26 flexibel in alle Richtungen parallel zur Trägerplatte 16 verfahren können.

Vorzugsweise umfassen die mobilen Handhabungseinheiten 26 jeweils eine elektrische Antriebseinrichtung (nicht dargestellt), insbesondere wenigstens einen Elektromotor, zum Antreiben der angetriebenen Räder 30. Die Antriebseinrichtung ist insbesondere in einem jeweiligen Gehäuse 34 der mobilen Handhabungseinheiten 26 angeordnet.

Zur elektrischen Versorgung der Antriebseinrichtung können die mobilen Handhabungseinheiten 26, insbesondere im Gehäuse 34, einen elektrischen Energiespeicher (nicht dargestellt), insbesondere in Form einer Batterie, aufweisen.

Wie in Figur 3 beispielhaft angedeutet, kann an der Trägerplatte 16 ein Parkbereich 36 definiert sein, in welchem nicht genutzte mobile Handhabungseinheiten 26 geparkt werden können. Der Parkbereich 36 kann gleichzeitig eine Ladezone 38 zum Laden des elektrischen Energiespeichers der mobilen Handhabungseinheiten 26 sein.

Wie aus Figur 1 ersichtlich, weist jede mobile Handhabungseinheit 26 an einer den Rädern 30, 32 gegenüberliegenden Seite zwei Greifvorrichtungen 40 auf. Bei nicht dargestellten Ausgestaltungen können aber auch mehr oder weniger Greifvorrichtungen 40 vorgesehen sein.

Die Greifvorrichtungen 40 sind im Beispiel als Sauggreifvorrichtungen 42 ausgebildet, welche jeweils eine Mehrzahl von Saugern 45 zum Ansaugen eines Gegenstands 44 aufweisen.

Wie vorstehend erwähnt, weisen die mobilen Handhabungseinheiten 26 vorzugsweise jeweils eine elektrische Unterdruckerzeugungseinrichtung (nicht dargestellt) zur Versorgung der jeweiligen Sauggreifvorrichtung 40 auf. Die elektrische Unterdruckerzeugungseinrichtung kann insbesondere in dem Robotergehäuse 34 angeordnet sein. Die elektrische Unterdruckerzeugungseinrichtung kann insbesondere durch den vorstehend beschriebenen elektrischen Energiespeicher betrieben sein.

Beispielhaft sind die Sauggreifvorrichtungen 42 wie vorstehend beschrieben mit mehreren Hubeinheiten 46 ausgebildet, welche entlang einer jeweiligen Hubachse (im Beispiel parallele zur vertikalen Richtung 24) zwischen einer eingefahrenen Konfiguration und einer ausgefahrenen Konfiguration verstellbar sind und an denen jeweils ein Sauger 45 angeordnet ist. Eine mögliche Ausgestaltung einer solchen Sauggreifvorrichtung 42 ist in der DE 10 2023 109 048 A1 der Anmelderin beschrieben, deren Offenbarungsgehalt hiermit durch Verweis einbezogen wird.

Wie vorstehend erwähnt, sind in dem Arbeitsraum 22 vorzugsweise wenigstens ein Quellbereich 48, aus welchem Gegenstände 44 abtransportiert werden sollen, und wenigstens ein Zielbereich 50, in welchen die Gegenstände 44 transportiert werden sollen, vorhanden.

Bei dem in Figur 1 dargestellten Beispiel sind der Quellbereich 48 und der Zielbereich 50 als Tische mit entsprechenden Ablagen ausgebildet. Bei dem Quellbereich 48 kann es sich beispielsweise um einen Ausgang einer Arbeitsstation handeln. Bei dem Zielbereich 50 kann es sich beispielsweise um ein Lager oder eine weitere Arbeitsstation handeln. Bei nicht dargestellten Ausgestaltungen kann auch der Boden des Arbeitsraums 22 den Quellbereich und/oder den Zielbereich bilden.

Wie vorstehend erwähnt, sind die mobilen Handhabungseinheiten 26 jeweils mittels Magnetkraft an der Trägerplatte 16 gehalten.

Dies ist im Beispiel dadurch realisiert, dass die Räder 30, 32 als magnetische Hafträder 52 ausgebildet sind, also ein permanentmagnetisches Material umfassen, und die Trägerplatte 16 als Stahlplatte ausgebildet ist. Es ist auch denkbar, dass nur eine Teilmenge der Räder 30, 32, insbesondere nur die angetriebenen Räder 30, als magnetische Hafträder 52 ausgebildet sind.

Bei nicht dargestellten Ausgestaltungen ist es ebenfalls denkbar, dass die Trägerplatte 16 als Magnettafel ausgebildet ist und die Räder 30, 32 als Stahlräder ausgebildet sind.

Wie in Figur 3 angedeutet, sind die mobilen Handhabungseinheiten 26 dazu ausgebildet, gemeinsam einen Gegenstand 44 zu greifen und zu verlagern. Beispielhaft sei auf den in Fig. 3 dreieckig dargestellten Gegenstand 44 verwiesen, welcher mittels dreier mobiler Handhabungseinheiten 26 gegriffen wird.

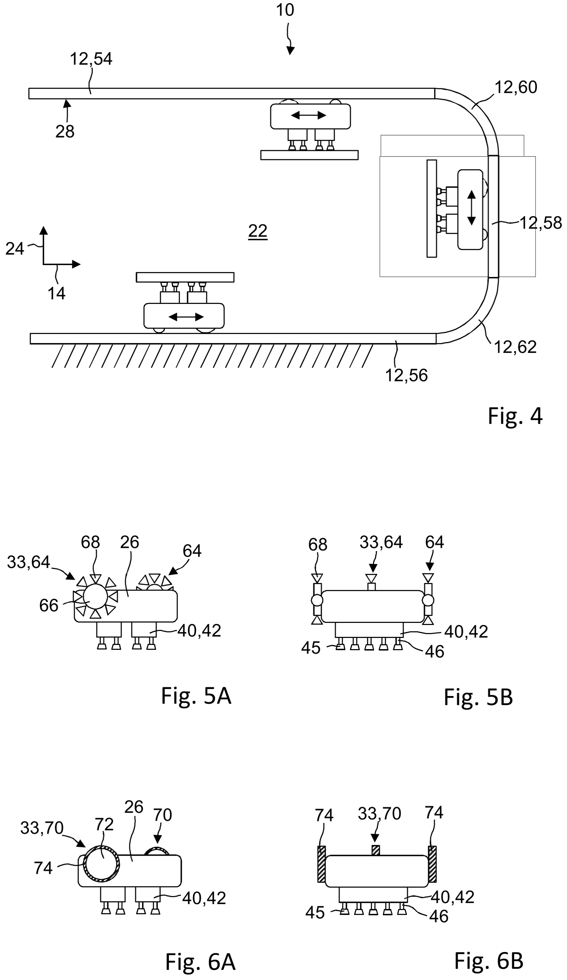

Die Figur 4 zeigt eine weitere beispielhafte Ausgestaltung einer Handhabungsanlage 10, die sich von der in Figur 1 gezeigten Handhabungsanlage durch die Ausgestaltung der Trägerstruktur 12 unterscheidet.

Wie aus Fig. 4 ersichtlich, weist die Trägerstruktur 10 im Beispiel einen Deckenabschnitt 54 auf, welcher den Arbeitsraum 22 in vertikaler Richtung 24 nach oben hin begrenzt. Die Trägerstruktur 12 weist außerdem einen Bodenabschnitt 56 auf, welcher den Arbeitsraum in vertikaler Richtung 24 nach unten hin begrenzt. Die Trägerstruktur 12 weist außerdem einen Seitenabschnitt 58 auf, welcher den Arbeitsraum 22 im Beispiel einseitig in horizontaler Richtung 14 begrenzt.

Wie aus Fig. 4 ersichtlich weist die Trägerstruktur 12 außerdem einen gebogen verlaufenden Decken-Übergangsabschnitt 60 auf, welcher den Deckenabschnitt 54 mit dem Seitenabschnitt 58 verbindet. Der Decken-Übergangsabschnitt 60 ist insbesondere derart ausgebildet, dass eine mobile Handhabungseinheit 26 von dem Deckenabschnitt 54 über den Decken-Übergangsabschnitt 60 zu dem Seitenabschnitt 58 fahren kann und umgekehrt.

Die Trägerstruktur 12 weist im Beispiel außerdem einen gebogen verlaufenden Boden-Übergangsabschnitt 62 auf, welcher den Seitenabschnitt 58 mit dem Bodenabschnitt 56 verbindet. Der Boden-Übergangsabschnitt 62 ist insbesondere derart ausgebildet, dass eine mobile Handhabungseinheit 26 von dem Seitenabschnitt 58 über den Boden-Übergangsabschnitt 62 zu dem Bodenabschnitt 56 fahren kann und umgekehrt.

Bei nicht dargestellten Ausgestaltungen ist es auch denkbar, dass die Trägerstruktur 12 lediglich einen oder eine Teilmenge der vorgenannten Abschnitte aufweist. Beispielsweise kann die Trägerstruktur 12 nur den Deckenabschnitt 56, den Decken-Übergangsabschnitt 60 und den Seitenabschnitt 58 aufweisen. Die Trägerstruktur 12 kann auch nur den Bodenabschnitt 56 aufweisen.

Die Figuren 5A und 5B zeigen eine weitere beispielhafte Ausgestaltung einer mobilen Handhabungseinheit 26, welche anstatt der Magneträder 52 Saugerräder 64 als Laufkomponenten 33 aufweist. Im Übrigen entsprechen die mobilen Handhabungseinheiten 26 gemäß Fig. 5A und 5B aber den vorstehend in Bezug auf die Figuren 1 bis 3 erläuterten Handhabungseinheiten 26, sodass zur Vermeidung von Wiederholungen auf vorstehende Offenbarung hierzu verwiesen wird.

Wie aus Fig. 5A ersichtlich, weist jedes Saugerrad 64 beispielhaft ein Trägerräd 66 und eine Mehrzahl von an einer Lauffläche des Trägerrads 66 angeordneten Saufnäpfen 68 auf. Im Betrieb liegen die Saugnäpfe 68 dann an der Trägerstruktur 12, insbesondere Trägerplatte 16, an und erzeugen somit eine Haltekraft (Saugkraft), mittels derer die mobile Handhabungseinheit 26 an der Trägerstruktur 12 gehalten ist.

Die Figuren 6A und 6B zeigen eine weitere beispielhafte Ausgestaltung einer mobilen Handhabungseinheit 26, welche anstatt der Magneträder 52 Adhäsionsräder 70 als Laufkomponenten 33 aufweist. Im Übrigen entsprechen die mobilen Handhabungseinheiten 26 gemäß Fig. 6A und 6B aber den vorstehend in Bezug auf die Figuren 1 bis 3 erläuterten Handhabungseinheiten 26, sodass zur Vermeidung von Wiederholungen auf vorstehende Offenbarung hierzu verwiesen wird.

Wie aus Fig. 6A ersichtlich, weist jedes Adhäsionsrad 70 beispielhaft ein Trägerrad 72 auf, an dessen Lauffläche eine Adhäsionsstruktur 74, insbesondere Geck-Struktur, angeordnet ist. Im Betrieb kontaktieren dann die Adhäsionsräder 70 mit der Adhäsionsstruktur 74 die Trägerstruktur 12 und stellen somit eine Adhäsionskraft bereit, mittels derer die Handhabungseinheit 26 an der Trägerstruktur 12 gehalten ist.

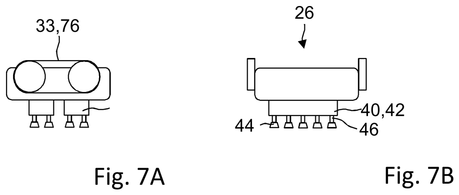

Die Figuren 7A und 7B zeigen eine weitere beispielhafte Ausgestaltung einer mobilen Handhabungseinheit 26, welche anstatt der Magneträder 52 eine Kette oder Band 76 als Laufkomponente aufweist. Im Übrigen entsprechen die mobilen Handhabungseinheiten 26 gemäß Fig. 7A und 7B aber den vorstehend in Bezug auf die Figuren 1 bis 3 erläuterten Handhabungseinheiten 26, sodass zur Vermeidung von Wiederholungen auf vorstehende Offenbarung hierzu verwiesen wird.

Die Kette 76 kann ein permanentmagnetisches Material umfassen. Alternativ kann die Kette 76 - ähnlich den Saugerrädern 68 - eine Mehrzahl von Saugnäpfen aufweisen. Alternativ kann die Kette 76 - ähnlich den Adhäsionsrädern 70 - eine umlaufende Adhäsionsstruktur aufweisen.

Die in den Figuren 5A bis 7B gezeigten Handhabungseinheiten 26 sind sowohl bei der Ausgestaltung der Handhabungsanlage 10 gemäß Fig. 1 als auch gemäß Fig. 4 einsetzbar.

## Patentansprüche

1. Handhabungsanlage (10), umfassend
- eine Trägerstruktur (12), insbesondere Trägerplatte (16), welche einen Arbeitsraum (22) zumindest abschnittsweise begrenzt,
- wenigstens eine, vorzugsweise mehr als eine, entlang der Trägerstruktur (12), insbesondere in beliebigen Richtungen, verfahrbare mobile Handhabungseinheit (26) zum Spannen und/oder Greifen eines in dem Arbeitsraum (22) angeordneten Gegenstands (44),
wobei die mobile Handhabungseinheit (26) wenigstens eine Laufkomponente (33), insbesondere Rad (30, 32), aufweist, mit der die mobile Handhabungseinheit (26) an einer dem Arbeitsraum zugewandten Seite der Trägerstruktur (12) entlang fährt, und wobei die mobile Handhabungseinheit (26) eine Antriebseinrichtung zum Antreiben der wenigstens einen Laufkomponente (33) aufweist;
- eine Halteeinrichtung zum Bereitstellen einer Haltekraft, insbesondere Anziehungskraft, zwischen der mobilen Handhabungseinheit (26) und der Trägerstruktur (12).

2. Handhabungsanlage (10) nach Anspruch 1, wobei die Trägerstruktur (12) den Arbeitsraum (22) in vertikaler Richtung (24) nach oben hin begrenzt, wobei die wenigstens eine mobile Handhabungseinheit (26) an einer dem Arbeitsraum (22) zugewandten Unterseite (28) der Trägerstruktur (12) angeordnet ist und mittels der Haltekraft, insbesondere Magnetkraft, gegen ein Herabfallen gehalten ist.

3. Handhabungsanlage (10) nach Anspruch 1 oder 2, wobei es sich bei der Haltekraft um eine Magnetkraft, eine Saugkraft und/oder eine Adhäsionskraft handelt.

4. Handhabungsanlage (10) nach einem der vorherigen Ansprüche, wobei die Laufkomponente (33) oder wenigstens eine der Laufkomponenten (33) der mobilen Handhabungseinheit (26) als Haftrad ausgebildet ist, welches mittels Magnetkraft, Saugkraft oder Adhäsionskraft an der Trägerstruktur (12) haftet.

5. Handhabungsanlage (10) nach einem der vorherigen Ansprüche, wobei die Laufkomponente (33) oder wenigstens eine der Laufkomponenten (33), insbesondere alle Laufkomponenten (33), der mobilen Handhabungseinheit (26) ein permanentmagnetisches Material aufweist und wobei die Trägerstruktur (12) ein magnetisierbares Material, insbesondere Stahl, aufweist oder umgekehrt.

6. Handhabungsanlage (10) nach einem der vorherigen Ansprüche, wobei die Laufkomponente (33) oder wenigstens eine der Laufkomponenten (33), insbesondere alle Laufkomponenten (33), der mobilen Handhabungseinheit (26) als magnetisches Haftrad (52) ausgebildet ist, wobei die Trägerstruktur (12) als Metallplatte, insbesondere Stahlplatte, ausgebildet ist oder eine solche aufweist.

7. Handhabungsanlage (10) nach einem der vorherigen Ansprüche, wobei die Laufkomponente (33) oder wenigstens eine der Laufkomponenten (33), insbesondere alle Laufkomponenten (33), der mobilen Handhabungseinheit (26) als Saugerrad (64), umfassend eine Mehrzahl von Saugnäpfen (68), ausgebildet ist
oder
wobei die Laufkomponente (33) oder wenigstens eine der Laufkomponenten (33), insbesondere alle Laufkomponenten (33), der mobilen Handhabungseinheit (26) als Adhäsionsrad (70) ausgebildet ist, welches an seiner Lauffläche eine Adhäsionsstruktur (74), insbesondere Gecko-Struktur, aufweist.

8. Handhabungsanlage (10) nach einem der vorherigen Ansprüche, wobei die Halteeinrichtung, insbesondere zusätzlich zu einer Ausgestaltung der wenigstens einen Laufkomponente (33) als Haftrad, eine von der wenigstens einen Laufkomponente (33) separat ausgebildete Saugeinrichtung, insbesondere Saugerplatte oder Bernoulli-Sauger aufweist, welche dazu ausgebildet ist, die Trägerstruktur (12) anzusaugen.

9. Handhabungsanlage (10) nach einem der vorherigen Ansprüche bei Rückbezug auf Anspruch 2, außerdem umfassend eine an der mobilen Handhabungseinheit (26) und/oder an der Trägerstruktur (12) angeordnete, insbesondere bedarfsweise aktivierbare, Sicherungseinrichtung, welche dazu ausgebildet ist, insbesondere unabhängig von der Halteeinrichtung, die mobile Handhabungseinheit (26) gegen ein Herabfallen zu sichern.

10. Handhabungsanlage (10) nach einem der vorherigen Ansprüche, wobei die Trägerstruktur (12) aufweist:
- einen Deckenabschnitt (54), der den Arbeitsraum (22) in vertikaler Richtung (24) nach oben hin begrenzt, insbesondere sich in einer horizontalen Richtung (14) erstreckt,
und/oder
- einen Bodenabschnitt (56), der den Arbeitsraum (22) in vertikaler Richtung (24) nach unten hin begrenzt
und/oder
- einen Seitenabschnitt (58), der den Arbeitsraum (22) in horizontaler Richtung (14) begrenzt.

11. Handhabungsanlage (10) nach einem der vorherigen Ansprüche, wobei die Trägerstruktur (12), insbesondere der Deckenabschnitt (54) und/oder der Bodenabschnitt (56), zumindest abschnittsweise höhenverstellbar ausgebildet ist.

12. Handhabungsanlage (10) nach einem der vorherigen Ansprüche, wobei die wenigstens eine mobile Handhabungseinheit (26) aufweist:
- eine Greifvorrichtung (40) zum Greifen des Gegenstands (44);
und/oder
- eine Hubeinrichtung, insbesondere Seilzug, Scherenhub oder Teleskopstange, an welcher die Greifvorrichtung gehaltert ist.

13. Handhabungsanlage (10) nach dem vorherigen Anspruch, wobei die Greifvorrichtung (40) als Sauggreifvorrichtung (42) ausgebildet ist, wobei die mobile Handhabungseinheit (26) außerdem eine, insbesondere elektrisch betriebene, Unterdruckerzeugungseinrichtung zur Versorgung der Sauggreifvorrichtung (42) mit Unterdruck aufweist.

14. Verfahren zum Betreiben einer Handhabungsanlage (10) nach einem der vorherigen Ansprüche, um einen in dem Arbeitsraum (22) der Handhabungsanlage (10) angeordneten Gegenstand (44) zu handhaben, insbesondere aus einem Quellbereich (48) in einen Zielbereich (50) zu überführen, wobei die Handhabungsanlage (10) zwei oder mehr mobile Handhabungseinheiten (26) aufweist,
wobei
wenigstens zwei mobile Handhabungseinheiten (26) in eine jeweilige Greifposition gefahren werden, aus welcher die mobilen Handhabungseinheiten (26) den Gegenstand (44) greifen können;
der Gegenstand (44) von den mobilen Handhabungseinheiten (26) gegriffen wird, sodass der Gegenstand (44) an den wenigstens zwei mobilen Handhabungseinheiten (26) gehalten ist; und
die mobile Handhabungseinheiten (26) gemeinsam, insbesondere synchronisiert, verfahren werden, insbesondere zu einem Zielbereich (50).

15. Computerprogrammprodukt, umfassend Befehle, die bewirken, die Handhabungsanlage gemäß einem der Ansprüche 1 bis 13 das Verfahren nach Anspruch 14 ausführt.
